## Europäisches Patentamt
## European Patent Office
## Office européen des brevets

(19)

(11) Numéro de publication: **0 036 808**
**B1**

(12) **FASCICULE DE BREVET EUROPEEN**

(45) Date de publication du fascicule du brevet: **18.07.84**

(51) Int. Cl.³: **H 04 L 11/00, H 04 Q 11/04**

(21) Numéro de dépôt: **81400408.1**

(22) Date de dépôt: **17.03.81**

(54) **Concentrateur de système de communication pour relier plusieurs terminaux asynchrones de téléinformatique.**

(30) Priorité: **20.03.80 FR 8006774**

(43) Date de publication de la demande:
**30.09.81 Bulletin 81/39**

(45) Mention de la délivrance du brevet:
**18.07.84 Bulletin 84/29**

(84) Etats contractants désignés:
**DE FR GB IT NL**

(56) Documents cités:
**DE - A - 2 205 260**
**FR - A - 2 277 487**
**FR - A - 2 331 221**

**MICROCOMPUTER ARCHITECTURES, third EUROMICRO symposium on microprocessing and microprocessing and microprogramming, 3-6 octobre 1977 North-Holland publishing company Amsterdam, NL H. LAYEC et al.: "Microprocessors and packet switching networks", pages 94-101**

(73) Titulaire: **Etablissement Public de Diffusion dit "Télédiffusion de France"**
**21-27 rue Barbès**
**F-92120 Montrouge (FR)**
Titulaire: **Renoulin, Roger Jean**
**29, Rue René Jean Mailleux**
**Thorigné-sur-Vilaine F-35510 Cesson (FR)**
Titulaire: **Le Brun, Jean Yves**
**34, Boulevard Clémenceau**
**F-35100 Rennes (FR)**

(72) Inventeur: **Renoulin, Roger**
**29, rue Jean Mailleux**
**Thorigné/vilaine F-35510 Cesson (FR)**
Inventeur: **Le Brun, Jean Yves**
**34, Boulevard Clémenceau**
**F-35000 Rennes (FR)**

(74) Mandataire: **Le Guen, Louis François**
**13, rue Emile Bara BP 91**
**F-35802 Dinard Cedex (FR)**

## Description

La présente invention concerne un concentrateur de système de communication destiné à relier plusieurs terminaux asynchrones de téléinformatique à vitesses de fonctionnements différentes, soit entre eux, soit à un réseau de communication et de commutation à grande vitesse.

Plus particulièrement, l'invention concerne un tel concentrateur utilisant comme moyen de liaisons avec les terminaux une boucle portant un multiplex temporel, éventuellement dupliqué pour des raisons de sécurité. Le nombre des terminaux raccordables peut atteindre une valeur plus élevée que celle que permettrait le débit cumulé des terminaux s'ils étaient actifs simultanément. A cet effet, on utilise dans le concentrateur une fonction de signalisation ou de veille pour surveiller l'état de chacun des terminaux. Cette fonction, qui caractérise le repos ou l'activité des terminaux, est basée sur l'exploration à vitesse réduite des terminaux au repos, sur la détection de leur changement d'état et sur l'allocation, en partage de temps, de la ressource de transmission du multiplex temporel entre les terminaux actifs en fonction de leurs besoins. Le partage de temps de la ressource de transmission est adaptatif.

Suivant une caractéristique de l'invention, le concentrateur comprend un circuit de commande central, associé à un premier microprocesseur, et des circuits de commande secondaires, chacun associé à un terminal ou un groupe de terminaux, qui sont reliés par une ligne bouclée transmettant un multiplex temporel de $n$ voies ou intervalles temporels (iT0 à iTn—1) groupés en multitrames de $m$ trames (0 à m—1), l'iTx de la trame 0 contenant la synchronisation multitrame et les iTx des trames 1 à $p$ étant affectés aux échanges d'information de service, les autres iT peuvent être affectés aux échanges d'information, dans chaque circuit de commande secondaire étant prévus des compteurs d'iT et de trames dont les sorties sont reliées à des décodeurs de numéros d'iT et de trames dont les sorties sont reliées à une porte ET dont la sortie est reliée à l'entrée d'activation d'un premier convertisseur série-parallèle dont l'entrée série reçoit le multiplex et dont la sortie parallèle est reliée à une entrée d'un microprocesseur secondaire dont une sortie est reliée l'entrée parallèle d'un convertisseur parallèle-série dont l'entrée d'activation est reliée à la sortie d'une seconde porte ET à trois entrées dont les deux premières sont respectivement reliées aux sorties desdits décodeurs de numéros d'iT et de trames et dont la troisième entrée est reliée à la sortie d'une première bascule, et dont la sortie est reliée au multiplex, les sorties des décodeurs de numéros d'iT et de trames étant activées pour les iTx des trames 1 à $p$.

Suivant une autre caractéristique, le microprocesseur a une sortie reliée à un bus le reliant à un registre de voie réception, un registre de trame réception, un registre de voie émission et un registre de trame émission, ces quatre registres étant respectivement reliés aux premières entrées de quatre comparateurs, la sortie du compteur de voies étant encore reliée respectivement aux secondes entrées des premier et troisième comparateurs et la sortie du compteur de trames étant encore reliée respectivement aux secondes entrées des second et quatrieme comparateurs, les sorties des premier et second comparateurs étant reliées à deux entrées d'une troisième porte ET à trois entrées dont la troisième entrée est reliée à une sortie de commande du microprocesseur secondaire et dont la sortie est reliée à l'entrée d'activation d'un troisième convertisseur série-parallèle dont l'entrée reçoit le multiplex et dont la sortie est relié à un terminal associé au circuit de commande secondaire, les sorties des troisième et quatrième comparateurs étant reliées à deux entrées d'une quatrième porte ET à trois entrées dont la troisième entrée est reliée à la sortie de commande du microprocesseur secondaire et dont la sortie est reliée à l'entrée d'activation d'un quatrième convertisseur parallèle-série dont la sortie est reliée au multiplex.

Les caractéristiques de l'invention mentionnée ci-dessus, ainsi que d'autres, apparaîtront plus clairement à la lecture de la description suivante d'exemples de réalisation, ladite description étant faite en relation avec les dessins joints, parmi lesquels:

la Fig. 1 est un bloc-diagramme schématique d'un concentrateur suivant l'invention,

la Fig. 2 est un diagramme temporel illustrant l'utilisation d'un multiplex primaire connu à 32 voies,

la Fig. 3 est un bloc-diagramme d'un équippement d'accès temporel utilisable dans un concentrateur suivant l'invention,

la Fig. 4 est un schéma d'un circuit de comparaison utilisable dans le circuit de la Fig. 3, et

la Fig. 5 est un bloc-diagramme d'une variante du circuit de la Fig. 3.

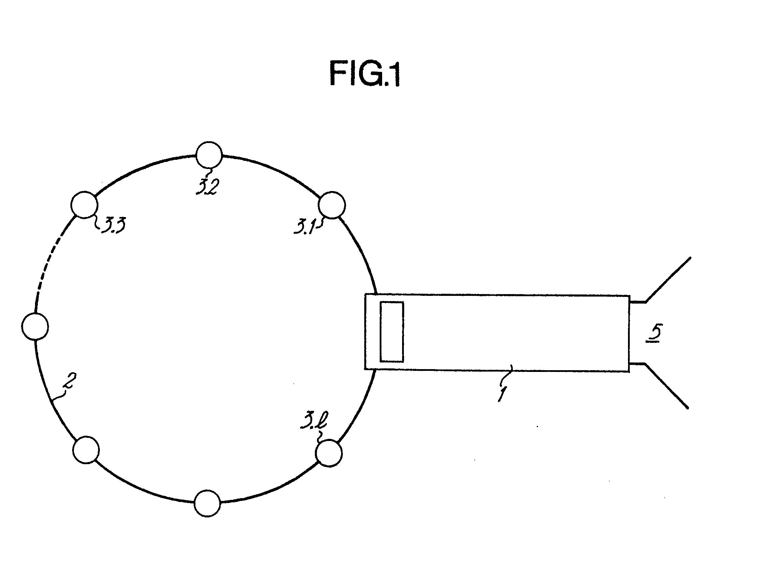

La Fig. 1 représente un concentrateur, suivant l'invention, comprenant un circuit de commande central 1 relié par une boucle 2 transmettant un multiplex temporel à une pluralité de circuits de commande secondaires 3.1 à 3.n servant d'équipements d'accès de terminaux à la boucle 2.

Le circuit de commande central est, par ailleurs, relié à un réseau de communication haute vitesse 5, par des coupleurs classiques, non montrés, qui répondent, par exemple, aux normes de transmission X25. Ainsi, le concentrateur suivant l'invention permet d'établir des communications entre les circuits de commande secondaires du concentrateur, ou entre ces circuits de commande secondaires et des terminaux extérieurs au concentrateur à travers le circuit de commande central.

Dans la suite, au lieu de considérer un multiplex temporel quelconque, on considérera un multiplex temporel primaire de n=32 voies, avec $x=16$, $m=20$ et $p=9$.

2

A titre de référence en ce qui concerne un multiplex temporel à 32 voies, on pourra se reporter à la plaquette publiée le 20 septembre 1973 par la "Conférence Européenne des Administrations des Postes et Télécommunications" et intitulée (en français) "Spécifications du système multiplex MIC du premier ordre". Si, dans la suite de la description, on cite l'utilisation d'un multiplex proche de celui qui a été défini dans cette plaquette, il faut comprendre que cette utilisation n'est pas limitative et que, notamment, il serait également possible d'envisager l'utilisation d'un multiplex primaire à 24 voies du type dit "Anglo-Saxon". Le concentrateur de l'invention peut être également utilisé avec un multiplex de quatre fois 32 voies, soit 128 voies.

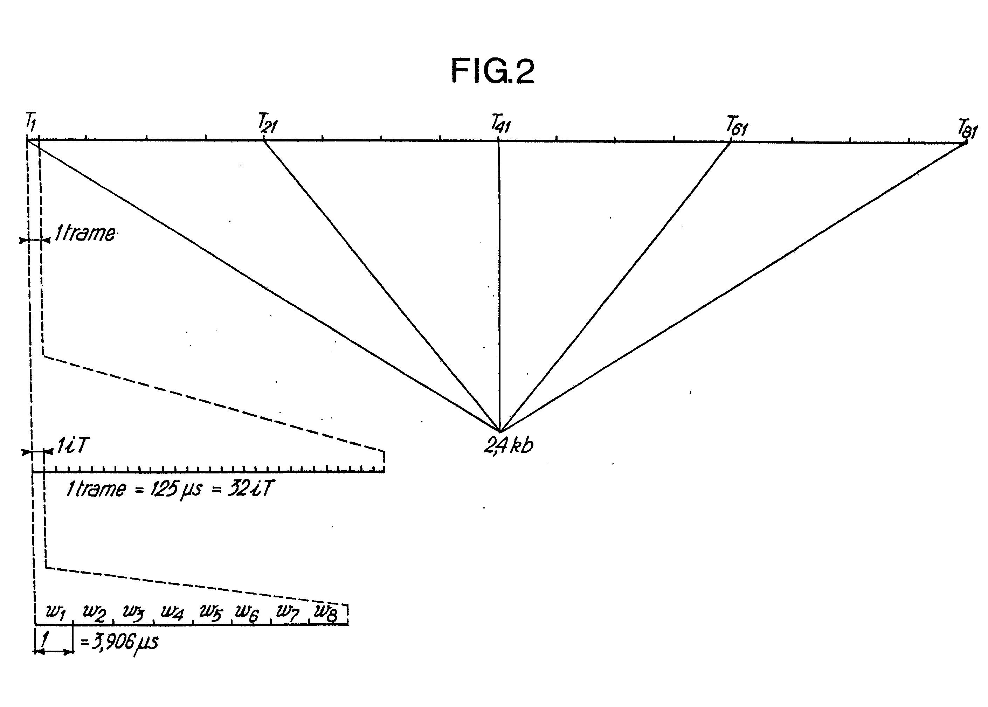

A la Fig. 2, on a représenté un diagramme temporel qui rapelle la constitution d'un liaison à multiplex temporel. En abscisse, on a représenté une suite des trames T1 à T81, parmi la suite ininterrompue des trames formant la liaison. Chaque trame a une durée de 125 microsecondes et est formée de 32 intervalles de temps iT0 à iT31. Chaque intervalle de temps se compose du huit temps élémentaires w1 à w8 servant chacun à transmettre un élément binaire 1 ou 0.

Dans le multiplex MIC mentionné ci-dessus, dans le cas d'une signalisation voie par voie, on regroupe les trames en multitrames qui chacune contiennent seize trames consécutives numérotées de 0 à 15 et le signal de verrouillage de multitrame est 0000, ce signal occupant les quatre premiers temps élémentaires w1 à w4 du premier intervalle de temps iT1 de la trame N°0. Par ailleurs, l'iT16 de chaque trame sert à transmettre la signalisation voie par voie. Les autres iT, soit iT1 à iT15 et iT17 à iT31 sont utilisés pour transmettre des échantillons de parole.

Cette ressource de transmission, par exemple pour un canal de parole à 64 kbit/s, est un iT de trame à 2,048 Mbit/s. Il apparaît que le mode de fonctionnement prévu classiquement pour des liaisons téléphoniques serait peu commode s'il était directement transposé en mode temporel car il entraînerait une interrogation toutes les 125 microsecondes.

En conséquence, suivant l'invention, on ajoute au multiplex primaire de 32 voies temporelles un niveau de multiplexage supplémentaire à l'intérieur d'une des voies temporelles ou intervalles de temps iT en groupant les trames en multitrames, selon un principe analogue à celui qui est déjà connu pour des transmissions numériques. A titre d'exemple, on constitue des multitrames contenant chacune vingt trames. Dans chaque trame, l'iT0 contient l'information de synchronisation de trame. Dans chaque multitrame, l'intervalle de temps iT16 de la trame 0 contient la synchronisation multitrame. Les intervalles iT16 des trames N°1 à N°19 sont affectés à des échanges d'informations de service. Dans chaque trame, les intervalles de temps iT1 à iT15 et iT17 à iT31 sont alloués à des échanges de données.

Le choix de vingt trames par multitrame permet de multiplexer des canaux de 2400 bauds, ou évidemment des canaux de 1200 bauds, tout en permettant de totaliser un débit de 64 kbit/s, dont 48 kbit/s utiles pour conserver une compatibilité avec les enveloppes définies dans l'avis X50 du CCITT.

Le fonctionnement du système en boucle, ou éventuellement multipoints à répartition temporelle synchrone des canaux de transmission suppose une phase préalable d'échange de signalisation, selon un mode sémaphore, entre l'unité de commande et les équipements d'accès qui signalent ou ont signalé leur intention d'entrer en communication. On retrouve là, l'analogie avec le décrochage d'un poste d'abonné téléphonique.

Ces messages de signalisation d'établissement et de rupture des communications, de supervision, etc., seront conformes aux procédures normalisées en vigueur, telles que celles qui font l'objet des recommandations du CCITT. Toutefois, à tire d'illustration, on donnera dans la suite un exemple de message d'appel et un exemple de message de connexion.

Les messages de signalisation sont transmis dans le canal correspondant à l'iT16 dans chaque trame. Ils peuvent avoir une taille variable, c'est à dire qu'ils peuvent être constitués d'un nombre quelconque d'octets, suivant le besoin du message, ce nombre étant toutefois limité supérieurement pour des raisons pratiques, comme on le verra ci-dessous.

En effet, en choisissant des multitrames formées de vingt trames, on dispose d'une synchronisation de multitrame ce qui permet de cadrer le débit des messages par rapport à la trame N°0 pour les messages d'interrogation émis à partir de l'unité de commande vers les équipements d'accès et par rapport à la trame N°10 pour les messages de réponse émis à partir des équipements d'accès vers l'unité de commande. Ce partage temporel des multitrames en deux sous-ensembles de deux fois dix trames s'adapte au mieux à la longueur des messages de signalisation qui n'excèdent jamais dix octets et permet un débit, dans chaque sens, égal à 24 kbit/s utiles ce qui est largement suffisant pour toute la signalisation entre l'unité de commande et les équipements d'accès.

Avent de décrire les constitutions possibles des messages de signalisation ou messages sémaphore, on va décrire la structure d'un circuit logique de synchronisation et de gestion utilisable dans un équipement d'accès raccordé à un système en boucle à répartition temporelle.

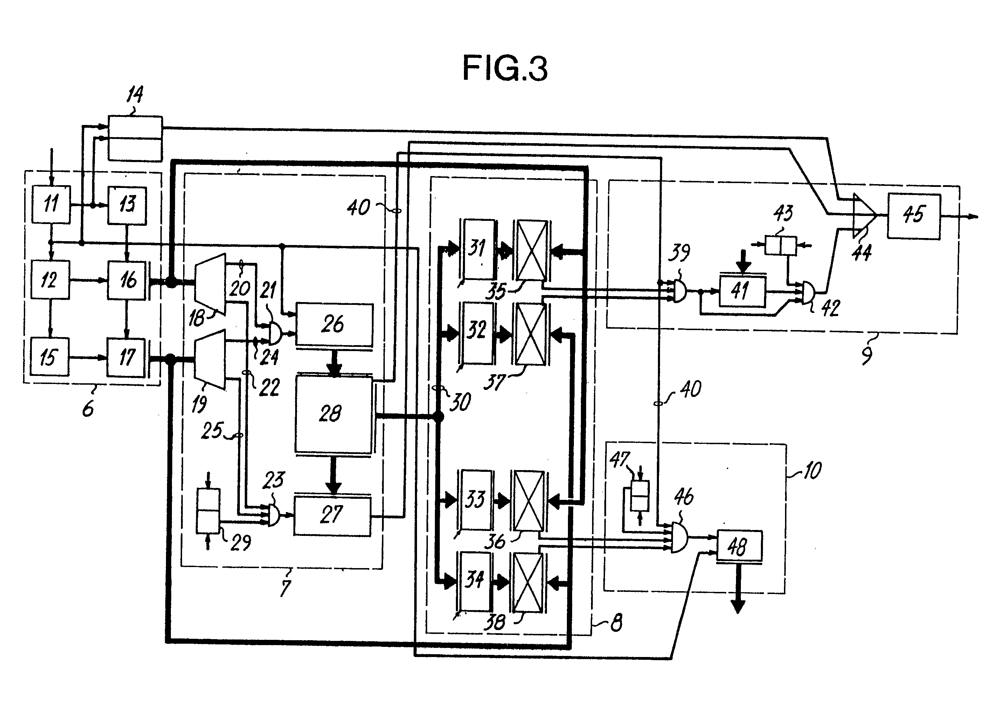

La Fig. 3 montre le bloc-diagramme d'un tel circuit logique de synchronisation et de gestion. Il comprend un sous-ensemble 6 de réception des trames transmises sur la liaison 2, un sous-ensemble 7 de commande, un sous-ensemble 8 de validation des voies temporelles et des trames, un sous-ensemble d'émission 9 et un sous-ensemble de réception 10.

Le sous-ensemble 6 comprend un module de réception HDB3 binaire 11 dont l'entrée est reliée à la liaison 2 et dont la sortie est reliée, en parallèle, aux entrées d'un circuit de synchronisation de trame 12, d'un circuit de récupération de rythme binaire et d'horloge octet 13 et d'un circuit de remise en phase de trame 14. La sortie du circuit 12 est reliée, d'une part, à l'entrée d'un circuit de synchronisation multitrame 15 et, d'autre part, à l'entrée d'initialisation d'un compteur de voies temporelles 16, dont l'entrée de signal est reliée à la sortie du circuit 13. La sortie du circuit 15 est reliée à l'entrée d'initialisation d'un compteur de trames 17 dont l'entrée de signal est reliée à la sortie du circuit 16. La sortie du circuit 15 est reliée à l'entrée d'initialisation d'un compteur de trames 17 dont l'entrée de signal est reliée à la sortie de débordement du compteur 16.

Dans le sous-ensemble 7, la sortie de compte du compteur 16 est reliée à l'entrée d'un décodeur de voie temporelle 18 tandis que la sortie de compte du compteur 17 est reliée à l'entrée d'un décodeur de trame 19. Le décodeur 18 comporte une sortie 20 qui reliée à la première entrée d'une porte ET 21 et une sortie 22 qui est reliée à la première entrée d'une porte ET à trois entrées 23. Le décodeur 19 comporte une sortie 24 qui est reliée à la seconde entrée de la porte ET 21 et une sortie 25 qui est reliée à la troisième entrée de la porte ET 23. La sortie de la porte ET 21 est reliée à l'entrée d'activation d'un convertisseur série-parallèle 26. La sortie de la porte ET 23 est reliée à l'entrée d'activation d'un convertisseur parallèle-série 27. L'entrée série de signal du convertisseur 26 est reliée à la sortie du module 11. La sortie parallèle de signal du convertisseur 26 est reliée à l'entrée d'un processeur 28. Une sortie de signal du processeur 28 est reliée à l'entrée parallèle du convertisseur 27. Enfin, la deuxième entrée de la porte ET 23 est reliée à la sortie d'une bascule 29 dont l'entrée de commande est reliée à une sortie (non montrée) du processeur 28.

Dans le sous-ensemble 8, un bus de commande 30 alimenté par le processeur 28 est relié aux entrées d'écriture de quatre registres 31 à 34. Le registre 31 sert à enregistrer le numéro d'une voie temporelle dans une trame, le registre 32 le numéro d'une trame dans une supertrame, tous les deux étant affectés à l'émission, le registre 33 le numéro d'une voie temporelle dans une trame et le registre 34 le numéro d'une trame dans une multitrame, tous les deux étant affectés à la réception.

Les sorties série des registres 31 et 33 sont respectivement reliées aux premières entrées de deux comparateurs 35 et 36 dont les secondes entrées sont reliées à la sortie de signal du compteur de voies temporelles 16. Les sorties série des registres 32 et 34 sont respectivement reliées aux premières entrées de deux comparateurs 37 et 38 dont les secondes entrées sont reliées à la sortie de signal du compteur de trames 17.

Dans le sous-ensemble d'émission 9, une porte ET à trois entrées 39 a une première entrée reliée à la sortie du comparateur 35, une seconde entrée reliée à une sortie de validation générale 40 du processeur 28 et une troisième entrée reliée à la sortie du comparateur 37. La sortie de la porte ET 39 est reliée, d'une part, à l'entrée d'activation d'un convertisseur série-parallèle 41 et, d'autre part, à une première entrée d'une porte ET à trois entrées 42 dont la seconde entrée est reliée à la sortie d'une bascule 43 et la troisième entrée à la sortie du convertisseur 41. Une porte OU à trois entrées 44 a une première entrée reliée à la sortie du convertisseur 27, une seconde entrée reliée à la sortie de la porte ET 42 et une troisième entrée reliée à la sortie d'un circuit de remise en phase 14. La bascule 43 a son entrée de commande reliée à une sortie de commande (non montrée) du processeur 28. La sortie de la porte OU 44 est reliée à l'entrée d'un transcodeur régénérateur HDB3 45 dont la sortie est reliée à la liaison 2.

Dans le sous-ensemble de réception 10, une porte ET à quatre entrées 46 a une première entrée reliée à la sortie du comparateur 36, une seconde entrée reliée à la sortie de validation générale du processeur 28, une troisième entrée reliée à la sortie du comparateur 38 et une quatrième entrée reliée à la sortie d'une bascule 47, laquelle a son entrée de commande reliée à une sortie de commande (non montrée) du processeur 28. La sortie de la porte ET 46 est reliée à l'entrée d'activation d'un convertisseur série-parallèle 48 dont l'entrée de signal est reliée à la sortie du module de réception 11 et dont la sortie est reliée à un terminal de données.

Avent de décrire les différents fonctionnements qui peuvent résulter des différentes significations des octets d'un message, on va décrire, en relation avec la Fig. 3 la réception, puis l'émission des octets.

Le module de réception 11 délivre à sa sortie les éléments binaires successifs correspondant au signal appliqué à son extrée. Dans le circuit de synchronisation de trame, le contenu de l'iT0 est reconnu et, à chaque reconnaissance, un signal de synchronisation est transmis au compteur de voies temporelles 16 qu'il initialise. L'horloge octet récupérée par le circuit 13 fait avancer le compteur 16. Quand le compteur 16 identifie l'iT16, son signal de sortie fait passer vers le circuit de synchronisation de multitrame 15 le signal de sortie du circuit 11. Quand le circuit 15 reconnaît le signal de synchronisation de multitrame dans l'iT16 correspondant, il transmet au compteur 17 un signal d'initialisation. Le compteur 17 compte les trames en comptant les signaux de débordement du circuit 16. A noter qu'en en pratique l'ensemble des circuits 11, 12, 13, 15, 16 et 17 existe sur le marché sous la forme d'un circuit intégré, tel que le circuit "MIC" commercialisé par la Société Lignes Télégraphiques et Téléphoniques (LTT).

En conclusion, la combinaison des données de sortie des compteurs 16 et 17 identifie complètement un iT dans sa trame et sa multitrame.

A chaque iT16, le décodeur 18 active sa sortie 20. A chacune des trames N° 0 à 9, le décodeur 19 active sa sortie 24. Donc la porte 21 s'ouvre pour chaque iT16 des trames N° 0 à 9. A chaque ouverture de la porte 21, les éléments binaires de l'iT16 correspondant sont introduits en série dans le convertisseur 26 qui transmet l'octet correspondant au microprocesseur 28. Le microprocesseur 28 comporte des moyens de comparaison lui permettant de reconnaître les messages du canal sémaphore qui lui sont adressés et des moyens pour enregistrer le contenu d'un message d'interrogation.

Après que le microprocesseur 28 a reconnu son identité et le contenu du message d'interrogation, il active la bascule 29, si bien que, quand les sorties 22 de 18 et 25 de 19 sont activées à l'iT16 de la trame N°10 et suivantes, les octets transmis en parallèle par 28 au convertisseur 27 sont transmis en série vers le circuit d'émission 45, par l'intermédiaire de la porte OU 44.

On va maintenant décrire les structures des messages d'interrogation et de réponse.

Comme le canal iT16 de sémaphore est partagé entre tous les équipements d'accès, il est nécessaire de prévoir un en-tête de message donnant l'identité du destinataire, dans le cas d'une interrogation, ou de l'identité de l'envoyeur, dans le cas d'une réponse, ainsi que le format, c'est à dire la longueur du message utile, puisque cette longueur, toujours inférieure à dix octets, est variable.

On a, pour un message d'interrogation, la structure suivante:

—octet N°1 (iT16, trame N°O) N° de l'équipement d'accès destinataire
—octet N°2 (iT16, trame N°1) 4 ebs de redondance pour le N° d'équipement, plus 4 ebs pour la longeur du message
—octets N° 3 à 10 contenu du message

On a, pour un message de réponse, la structure suivante:

—octet N°1 (iT16, trame N°10) N° de l'équipement d'accès envoyeur
—octet N°2 (iT16, trame N°11) 4 ebs de redonance pour le N° d'équipement, plus 4 ebs pour la longueur de message
—octets N° 3 à 10 contenu de message

Pour éviter les conflits d'accès des équipements d'accès au canal de réponse, représenté par les iT16 des trames 11 à 20 d'une supertrame, il est prévu que les équipements d'accès ne peuvent émettre un message qu'en réponse à une interrogation de l'unité de commande. Cette procédure nécessite une scrutation systématique des 256 équipements, ce qui correspond au huit éléments binaires de l'octet N°1 d'un message d'interrogation, qui sont susceptibles d'être raccordés à la boucle, que ces équipements soient raccordés isolément ou sous forme de grappes.

Dans ces conditions, un cycle complet interrogation-réponse dure 256 fois vingt trames, soit $256 \times 20 \times 125 \ 10^{-6}$ secondes, c'est à dire 640 millisecondes. Cette durée est tout à fait raissonnable pour une ronde de veille assurant la scrutation des équipements passant d'un état de repos à un état actif. Dans la présente description, on considère comme équipement actif un équipement d'accès ayant un message d'appel ou de raccrochage à envoyer. Dans le cas d'un appel, le message est généralement constitué par le numéro de l'abonné demandé.

Si l'on suppose que le terminal associé à l'équipement d'accès est un poste d'abonné téléphonique, le numéro de l'abonné demandé comprend les chiffres *AB PQ MCDU* codé en décimal binaire, ce qui conduit à quatre éléments binaires par chiffres, soit à quatre octets pour un numéro complet. Le type de message, par exemple message d'appel ou message de raccrochage, doit également être codé. Le type de service auquel l'équipement d'accès désire accéder, par exemple réseau téléphonique, réseau Transpac, réseau de télécopie, réseau Télétel, etc., doit également être codé. Si l'on réserve quatre éléments binaires pour discriminer un type de message entre seize possibles et quatre éléments binaires pour discriminer un service entre seize possibles, il apparaît que le message d'appel comporte sept octets, c'est à dire:

| | |
|---|---|
| octet N°1 | Identité de l'équipement d'accès (trame 0) |
| octet N°2 | 4 ebs de redondance+4 ebs de format |
| octet N°3 | 4 ebs de type de message, plus 4 ebs de type de service |
| octet N°4 | numéro du demandé |
| octet N°5 | " |
| octet N°6 | " |
| octet N°7 | " |

Si l'on fait l'hypothèse de débits de 1200 ou 2400 bauds pour les applications télématiques du concentrateur suivant l'invention, et si l'on suppose que les débits de données sont de nature symétrique, on choisit de réserver les dix premières trames de la multitrame pour un sens de transmission (unité de commande vers les équipements d'accès) et les dix dernières trames de la multitrame pour l'autre sens (équipements d'accès vers unité de commande). Bien entendu, il faut comprendre que le système de transmission à 2 Mbit/s est bouclé et que les deux sens de transmission définis ci-dessus ne sont qu'un artifice de langage.

En raison de la répartition en deux sous-ensembles de dix trames, on ne dispose que de 32 kbit/s par sens de transmission pour une voie temporelle affectée aux données, ce qui fait, en considérant le p.p.c.m., 24 kbit/s utiles, soit vingt terminaux actifs à 1200 bit/s ou dix terminaux actifs à 2400 bit/s sur une voie temporelle.

Dans un exemple de réalisation, on a retenu ce débit utile de 24 kbit/s par voie temporelle en raison de la récurrence requise pour l'adressage temporel des différents canaux actifs. Ainsi, un terminal à 1200 bauds pourra émettre dans l'iT qui lui est alloué toutes les vingt trames, ce qui signifie qu'on doit lui préciser également le numéro de trame parmi vingt qui lui est alloué.

Dans un premier exemple de transaction avec un équipement d'accès associé à un terminal à 1200 bauds, on suppose que l'unité de commande transmet par le message défini plus haut l'ordre à l'équipement d'accès d'utiliser la trame N°M dans la multitrame et l'iT N°Y pour transmettre vers l'unité de commande des octets de données provenant du terminal assosié à l'équipement d'accès. Le processeur 28 transmet alors au registre 31 la valeur du nombre Y et au registre 32 la valeur du nombre M, par l'intermédiaire du bus 30. Dans la suite du fonctionnement, chaque fois que la sortie du compteur 16 indique le compte Y et la sortie du compteur 17 le compte M, les comparateurs 35 et 37 respectivement détectent une coïncidence et activent leurs sorties respectives. Par ailleurs, le processeur 28 active à un moment approprié sa sortie 40, par exemple, le temps d'une supertrame après avoir fait émettre par 27 un message de réponse qui sert d'accusé de réception de l'ordre reçu. Enfin, le processeur 28 fait changer l'état de la bascule 43.

La porte 39 est alors ouverte, ainsi que la porte 42, et à chaque iTY d'une trame N°M, l'octet de données introduit en parallèle dans le registre 41 est transmis en série par le circuit 45, par l'intermédiaire de la porte OU 44.

Pendant cette transmission, l'unité de commande peut, de temps à autre, envoyer au processeur 28 un message d'interrogation, défini plus haut, pour connaître l'état du terminal, c'est à dire savoir si celui-ci a encore des données à transmettre ou non. Le processeur 28 fait connaître cet état par un message de réponse en réponse à l'interrogation par l'unité de commande 1. A la fin de la transmission, le processeur 28 efface les contenus de 31 et 32 et, quand l'unité de commande 1 a reçu, par un message de réponse, l'information de libération, elle peut dispenser de l'iTY et de la trame N°M pour un autre équipement d'accès.

Dans un second exemple de transaction avec un équipement associé à un terminal à 1200 bauds, on suppose que l'unité de commande 1 transmet par le message de service du type message d'interrogation l'ordre à l'équipement d'accès d'utiliser la trame N°N dans la multitrame et l'iTZ pour recevoir dans le terminal associé des octets de données provenant de l'unité de commande. Le processeur 28 transmet alors, par le bus 30, au registre 33 la valeur du nombre Z et au registre 34 la valeur de nombre N. Dans la suite du fonctionnement, chaque fois que la sortie du compteur 16 indique le compte Z et la sortie du compteur 17 le compte N, les comparateurs 36 et 38 respectivement détectent une coïncidence et activent leurs sorties respectives. Par ailleurs, le processeur 28 active sa sortie 40 à un moment approprié, par exemple comme dans l'exemple précédent, et fait changer d'état à la bascule 47.

La porte 46 est alors ouverte et, à chaque iTZ d'une trame N°N, le message disponible à la sortie du circuit 11 est introduit dans le convertisseur 48 d'où il est transmis en parallèle au terminal associé. Quand l'unité de commande 1 a terminé sa transmission, elle en avise le processeur 28 par un message de service approprié. Le processeur 28 met alors au repos la bascule 47.

Dans un troisième exemple de transaction avec un équipement d'accès associé à un terminal à 2400 bauds, il faut prévoir que l'équipement d'accès doit pouvoir transmettre deux octets par supertrame, soit par exemple un octet toutes les dix trames. Dans ce cas le message d'ordre transmis par l'unité de commande contient le numéro de l'iT à utiliser et les deux numéros de trames à utiliser dans une supertrame. En variante, au lieu de contenir les numéros des deux trames, le message d'ordre peut contenir le numéro de la première trame à utiliser, suivi d'une information de périodicité de répétition de transmission dans la multitrame. Si l'on choisit d'utiliser une information de périodicité, le message d'ordre aura le forme suivante:

| | |
|---|---|
| octet N°1 | Identité de l'équipement d'accès (trame 0) |
| octet N°2 | 4 ebs de redondance+4 ebs de format |
| octet N°3 | 4 ebs de type de message, plus 4 ebs de type de service |
| octet N°4 | 5 ebs pour le N° d'iT à utiliser (iT 0 à 15 en émission, iT 16 à 31 en réception) |
| octet N°5 | 4 ebs pour un N° de trame parmi 20 |
| octet N°6 | 5 ebs pour la périodicité de répétition de la trame. |

Il fait noter que l'octet N°6 du message ci-dessus peut être utilisé quel que soit le débit du terminal associé à l'équipement d'accès. En effet, les cinq ebs de l'octet N°6 permettent d'identifier une périodicité de vingt trames pour les terminaux à 1200 bauds, de dix trames pour les terminaux à 2400 bauds et de cinq trames pour des terminaux à 4800 bauds, etc.

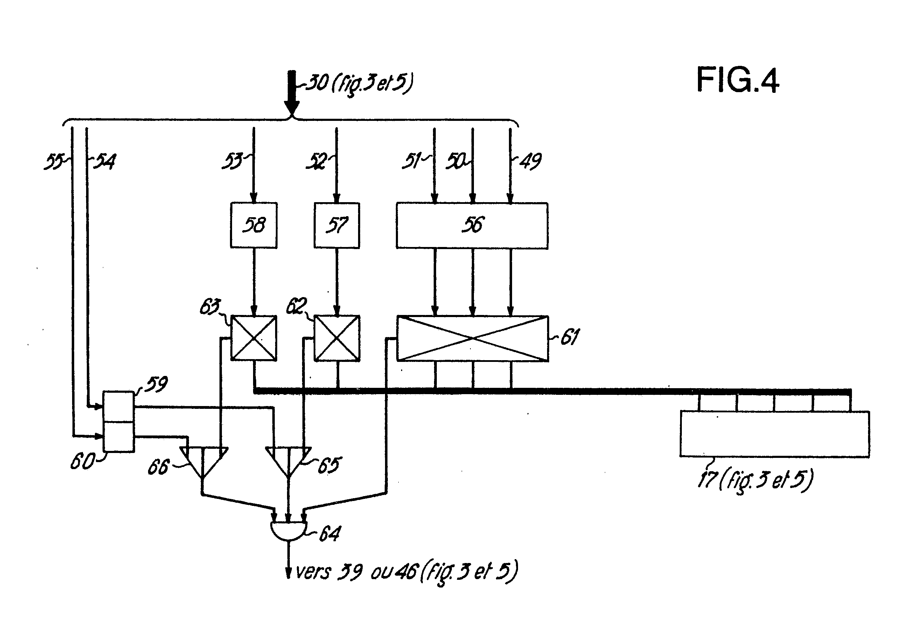

La Fig. 4 montre un circuit destiné à remplacer les circuits 32 et 37 de la Fig. 3 pour permettre au

6

circuit logique de synchronisation et de gestion de traiter un message d'ordre à six octets mentionné ci-dessus.

Dans le circuit de la Fig. 4, on a sept fils 49 à 55 reliés au bus 30. Les fils 49 à 51 sont reliés aux entrées d'un registre 56 pouvant enregistrer trois éléments binaires qui identifient une trame parmi cinq. Le fil 52 est relié à un registre 57 pouvant enregistrer un élément binaire qu identifie si le N° d'une trame est entre 1 et 5, ou entre 6 et 10. Le fil 53 est relié à un registre 58 pouvant enregistrer un élément binaire qui identifie si le N° d'une trame est entre 1 et 10, ou entre 11 et 20. Le fil 54 est relié à l'entrée d'une bascule 59 et le fil 55 est relié à l'entrée d'une bascule 60.

Les trois sorties du registre 56 sont respectivement reliées aux trois premières entrées d'un comparateur 61 dont les trois secondes entrées sont reliées aux fils correspondants de la sortie du compteur de trame 17. La sortie du registre 57 est reliée à la première entrée d'un comparateur 62 dont la seconde entrée est reliée à la sortie correspondante du compteur 17. De même, la sortie du registre 58 est reliée à la première entrée d'un comparateur 63 dont la seconde entrée est reliée à la sortie correspondante du compteur 17.

La sortie du comparateur 61 est reliée à la première entrée d'une porte ET 64 à trois entrées dont la sortie est reliée à une entrée de la porte ET 39. La sortie du comparateur 62 est reliée à la première entrée d'une porte OU à deux entrées 65. La sortie du comparateur 63 est reliée à la première entrée d'une porte OU à deux entrées 66. Les sorties des portes OU 65 et 66 sont respectivement reliées aux deuxième et troisième entrées de la porte ET 64. La sortie de la bascule 59 est reliée à la seconde entrée de la porte OU 65 et la sortie de la bascule 60 est reliée à la seconde entrée de la porte OU 66.

Si l'on suppose que le message d'ordre ne comprend pas d'octet N°6, les états des fils 54 et 55 sont au niveau $0$, ce qui entraîne des sorties $0$ sur les bascules 59 et 60. Dans ce cas, les entrées de la porte ET 64 ne seront au niveau $1$ que pour une trame sur vingt, ce qui convient pour le trafic d'un terminal à 1200 bauds.

Si, dans le message d'ordre, l'octet N°6 indique une périodicité de répétition d'affection d'une trame toutes les dix trames, le processeur 28 met le fil 55 à $1$. La sortie de la bascule 60 est alors au niveau $1$ qui est transmis, par la porte OU 66, à la troisième entrée de la porte 64. Donc, dès qu'il y a comparaison positive dans les comparateurs 61 et 62, la porte 64 transmet un niveau $1$, c'est à dire que le N° de la trame soit $P$ ou $P+10$. Le circuit permet donc de traiter des terminaux à 2400 bauds.

Si, dans le message d'ordre, l'octet N°6 indique une périodicité de répétition toutes les cinq trames, le processeur 28 met les fils 54 et 55 à $1$. Les sorties des bascules 59 et 60 sont au niveau $1$, si bien que les deuxième et troisième entrées de 64 sont à $1$. Donc, dès qu'il y a comparaison positive dans le comparateur 61 la porte 64 transmet un niveau $1$, c'est à dire que le N° de la trame soit $P$, $P+5$, $P+10$ ou $P+15$. Le circuit permet donc de traiter des circuits à 4800 bauds.

Bien entendu, le circuit de la Fig. 4 peut également remplacer les circuits 34 et 38 pour la réception de données. La sortie de 64 est alors reliée à une entrée de la porte ET 46.

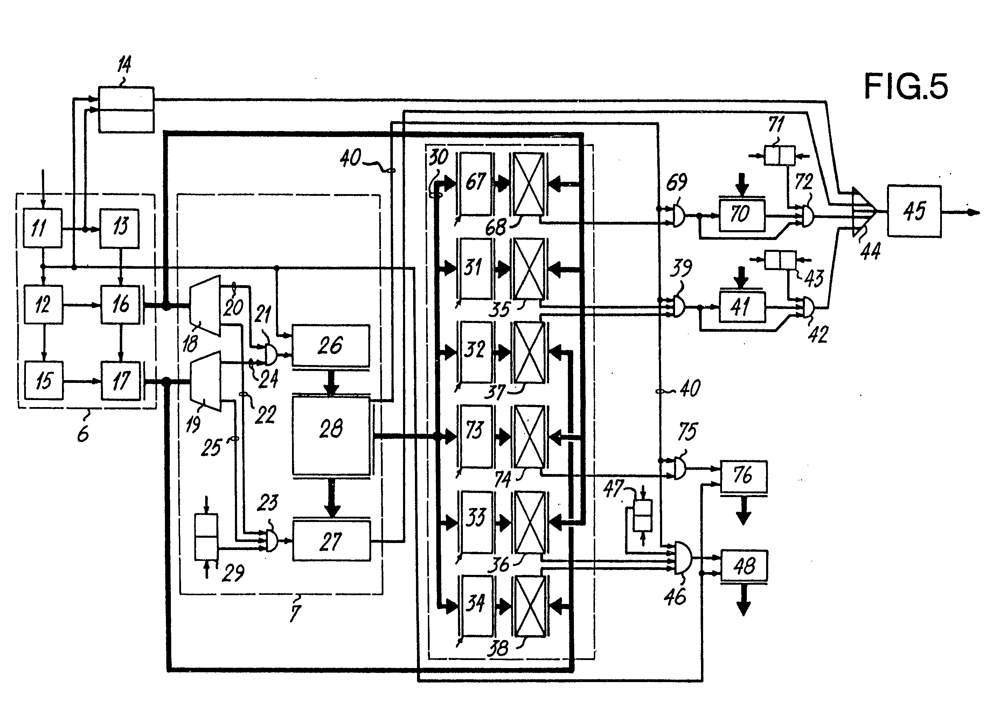

A la Fig. 5, on a représenté un circuit logique de synchronisation et de gestion utilisable dans un équipement d'accès capable de traiter les messages d'équipements à 1200, 2400 ou 4800 bauds, comme on l'a vu ci-dessus, mais encore capable de traiter des signaux de paroles téléphoniques.

Le circuit de la Fig. 5 comprend tous les circuits de la Fig. 3 et éventuellement ceux de la Fig. 4. Il comprend, de plus, un registre 67 dont l'entrée est reliée au bus 30 et dont la sortie est reliée à une entrée d'un comparateur 68 dont l'autre entrée est reliée à la sortie du compteur de voies 16. La sortie de 68 est reliée à une entrée d'une porte ET 69 à deux entrées dont l'autre entrée est reliée au fil 40 et dont la sortie est reliée à l'entrée d'activation d'un convertisseur parallèle-série 70. Les sorties de 69, de 70 et d'une bascule 71 sont reliées aux trois entrées d'une porte ET 72 dont la sortie est reliée à une entrée supplémentaire de la porte OU 44. L'entrée parallèle du convertisseur 70 au codeur du poste téléphonique associé à l'équipement d'accès.

Le registre 67 peut enregistrer le N° d'une voie dans une trame qui lui est transmis du processeur 28. Comme, pour les communications téléphoniques, on prévoit d'attribuer une voie par trame, la coïncidence dans 68 avec le compte de 16 suffit à faire vider le convertisseur 70. La bascule 71 joue le même rôle que 43 et la porte 72 le même rôle que 42.

Bien entendu, côté réception, on trouve les circuits correspondants, c'est à dire un registre de N° de voie 73, un comparateur 74, une porte ET à deux entrées 75 et un convertisseur série-parallèle 76 dont la sortie est reliée au décodeur du poste téléphonique.

Le circuit de la Fig. 5 montre qu'un circuit logique, suivant l'invention, peut assurer les transmissions dans les deux sens des données provenant ou destinées, à la fois, à un téléphone et à un terminal de données. Bien entendu, on peut multiplier les registres de N° de voie et de N° de trame, avec les comparateurs et les convertisseurs correspondants, pour permettre, en dehors du téléphone, de traiter simultanément les trafics de plusieurs terminaux de données. Les branchements de ces circuits seraient évidents pour l'homme de l'art.

Dans les exemples d'application décrits ci-dessus, on a considéré des canaux de transmission synchrones. Toutefois, dans le cas de canaux alloués aux transmissions asynchrones, les équipements d'accès, suivant l'invention, peuvent être utilisés. Dans ce cas, en raison du caractère sporadique de l'émission des données, par exemple depuis un clavier, le canal doit être, en dehors des caractères utiles, rempli par des caractères de bourrage FF.

**O 036 808**

En ce qui concerne les canaux de transmission synchrones (2400 bit/s, 4800 bit/s, etc.), la structure retenue est identique à la structure de trame X50 recommandée par le CCITT, laquelle, grâce à des enveloppes 6+2, permet dans une voie temporelle à 64 kbit/s de véhiculer 48 kbit/s utiles, soit un multiple entier des débits courants (300 bit/s, 600 bit/s, 1200 bit/s, 2400 bit/s, 4800 bit/s, 9600 bit/s), ce qui facilite la structure de multiplexage par multitrames, même si dans la topologie de réseau multipoints retenue, la signalisation est véhiculée par le canal sémaphore de l'iT16 et non pas par le biais du fil "S" de l'enveloppe "A2" dont seul l'élément binaire de délimitation de trame synchrone est utilisé.

Dans le cas d'un appel d'un réseau de commutation par paquets, tel que par exemple le réseau TRANSPAC, ce message d'appel sera composé de la façon la plus proche d'un paquet d'appel, c'est à dire longueur de l'adresse codée sur quatre éléments binaires et jusqu'à dix chiffres décimaux, soit six octets en tout qui occuperont les iT16 des trames N°4 à N°9.

On doit, dans le cas d'un appel vers un service de télématique, préciser la classe de débit à laquelle on désire trafiquer.

A titre d'exemple, étant donné le nombre restreint de services auxquels on peut accéder, la classe de débit peut être implicitement contenue dans les quatre éléments binaires de type de service définis plus haut. Ainsi on peut prévoir huit classes:

| | | |
|---|---|---|
| classe 0 | = | 64 kbit/s téléphonique |
| classe 1 | = | télétel à 1200 bit/s asynchrones |
| classe 2 | = | télécopie à 2400 bit/s asynchrones |
| classe 3 | = | accès à Transpac asynchrone |
| ... | | ...... |
| classe 8 | = | accès synchrones |

On va maintenant considérer un exemple de message de connexion. Une fois qu'il a été enregistré dans l'unité de commande, le message d'appel doit être traduit en "connexion" du demandeur vers le demandé. Dans le cas d'un appel téléphonique, la "connexion" revient à attribuer une voie temporelle au demandeur et, si le demandé est un abonné local (communication locale) une voie temporelle au demandé.

Cette fonction de marquage de la "connexion" est tout à fait analogue à celle que l'on rencontre dans les réseaux de commutation temporelle. On devra donc envoyer à chacun des correspondants (demandeur et demandé) le N° de voie temporelle sur laquelle il doit émettre et le N° de voie temporelle sur laquelle il doit écouter son correspondant.

Le message de connexion sera donc constitué pour le demandeur par la séquence suivante:

octet N°1 (iT16, trame N°0) N° de l'équipement d'accès
octet N°2 (iT16, trame N°1) 4 ebs de redondance plus 4 ebs de format
octet N°3 (iT16, trame N°2) 4 ebs de fonction de connexion plus 4 ebs de type de réseau
octet N°4 (iT16, trame N°3) 5 ebs de N° de voie émission, plus 3 ebs de redondance
octet N°5 (iT16, trame N°4) 5 ebs de N° de voie réception, plus 3 ebs de redondance

Pour le demandé, le message sera semblable, les N° des voies temporelles étant inversées. Il faut bien comprendre qu'avant d'envoyer ce message de connexion vers le demandé, l'unité de commande a adressé à son équipement d'accès un message d'appel pour sonner le demandé et que celui-ci a répondu par un message indiquant son état décroché.

Bien entendu, pour la sécurité de fonctionnement du système, tous ces messages font l'objet d'accusés de réception corrects qui sont nécessaires pour valider l'exécution des fonctions commandés par les messages.

On peut observer que, dans chaque circuit de commande secondaire, le moment d'émission du multiplex est retardé par rapport à son moment d'émission, le retard couvrant les opération de capture des octets destinés aux terminaux associés au circuit de commande secondaire et les opérations d'insertion des octets envoyés par ces terminaux. A ce retard s'joute encore celui apporté par le circuit 13 pour la récupération d'horloge. Le circuit de remise en phase de trame 14 tient compte de ces délais pour qu'à la sortie de la porte 44, les positions relatives des intervalles de temps soient conservées.

Ce mode de repérage temporel (ou d'une manière plus générale horaire) est basé sur les reconnaissance des codes de synchronisation de débuts de trames et de multitrame, dans les iT0 des trames, ce qui permet à chaque circuit de commande secondaire de caler sa propre base de temps esclave par rapport à la base de temps maîtresse du circuit de commande central. Ainsi, dans la mesure où le code de synchronisation subit, dans les circuits de commande secondaires et dans le circuit de commande central, les mêmes retards que les données utiles, on peut assimilerce mode de référence temporelle sur la boucle à une mécanisme de fuseau horaire. Comme il peut y avoir un nombre quelconque de circuits de commande secondaires sur la boucle, et donc un retard total quelconque, il faut prévoir, dans le circuit de commande central, un dispositif de remise à l'heure des informations avant leur insertion au point origine de la boucle.

8

**O O36 8O8**

Ainsi, dans le circuit de commande central est prévue une mémoire FiFo où les informations sont déposées par référence à une heure de réception et émises ou réémises en référence à une heure d'émission définie par la base de temps maîtresse.

## Revendications

1. Concentrateur de système de communication destiné à relier plusieurs terminaux asynchrones de téléinformatique à vitesses de fonctionnement différentes, soit entre eux, soit à un réseau de communication et de commutation à grande vitesse caractérisé en ce qu'il comprend un circuit de commande central (1), associé à un microprocesseur primaire, et des circuits de commande secondaires (3.1 à 3.l), chacun associé à un terminal ou un groupe de terminaux, qui sont reliés par une ligne (2) transmettant un multiplex temporel de $n$ voies ou intervalles temporels (iT0 à iT(n—1)) groupés en multitrames de $m$ trames (0 à (m—1)), l'iTx de la trame 0 contenant la synchronisation multitrame et les iTx des trames 1 à $p$ étant affectés aux échanges d'information de service, les autres iT pouvant être affectés aux échanges d'information, dans chaque circuit de commande secondaire (3.1 à 3.n) étant prévus des compteurs d'iT (16) et de trames (17) dont les sorties sont reliées à des décodeurs de numéros d'iT (18) et de trames (19) dont les sorties sont reliées à une porte ET (21) dont la sortie est relié à l'entrée d'activation d'un premier convertisseur série-parallèle (26) dont l'entrée série reçoit le multiplex et dont la sortie parallèle est reliée à une entrée d'un microprocesseur secondaire (28) dont une sortie est relié à l'entrée parallèle d'un convertisseur parallèle-série (27) dont l'entrée d'activation est reliée à la sortie d'une seconde porte ET (23) à trois entrées dont, les deux premières sont respectivement reliées aux sorties desdits décodeurs de numéros d'iT (18) et de trames (19) et dont la troisième entrée est reliée à la sortie d'une première bascule (29), et dont la sortie est reliée au multiplex, les sorties des décodeurs de numéros d'iT (18) et de trames (19) étant activées pour les iTx des trames 1 à $p$.

2. Concentrateur suivant la revendication 1, caractérisé en ce que chaque microprocesseur secondaire (28) a une sortie reliée à un bus (30) le reliant à un registre de voie réception (33), un registre de trame réception (34), un registre de voie émission (31) et un registre de trame émission (32), ces quatre registres (31 à 34) étant respectivement reliés aux premières entrées de quatre comparateurs (35, 37, 36, 38), la sortie du compteur de voies (16) étant encore reliée respectivement aux secondes entrées des premier (36) et troisième (35) comparateurs et la sortie du compteur de trames (17) étant encore reliée respectivement aux secondes entrées des second (38) et quatrième (37) comparateurs, les sorties des premier et second comparateurs (36, 38) étant reliées à deux entrées d'une troisième porte ET (46) à trois entrées dont la troisième entrée est reliée à une sortie de commande du microprocesseur secondaire (28) et dont la sortie est reliée à l'entrée d'activation d'un troisième convertisseur série-parallèle (48) dont l'entrée reçoit le multiplex et dont la sortie est reliée à un terminal associé au circuit de commande secondaire, les sorties des troisième et quatrième comparateurs (35, 37) étant reliées à deux entrées d'une quatrième porte ET (39) à trois entrées dont la troisième entrée est reliée à la sortie de commande du microprocesseur (28) secondaire et dont la sortie est reliée à l'entrée d'activation d'un quatrième convertisseur parallèle-série (41) sont la sortie est reliée au multiplex.

3. Concentrateur suivant la revendication 2, caractérisé en ce que chaque circuit de commande secondaire comprend autant de groupe de quatre registres, chaque groupe comprenant un registre de voie réception, un registre de trame réception, un registre de voie émission et un registre de trame émission, et de groupe de comparateurs, chaque groupe comprenant un premier, un second, un troisième et un quatrième comparateur, que de terminaux qui lui sont associés.

4. Concentrateur suivant la revendication 2 ou 3, caractérisé en ce que, quand le terminal considéré associé au circuit de commande secondaire est une téléphone, les registres de trame du groupe sont supprimés ainsi que les second et quatrième comparateurs.

## Patentansprüche

1. Konzentrator für Kommunikationssystem zum Anschliessen mehrer asynchroner Telematik-Terminals, die mit unterschiedlichen Geschwindigkeiten, entweder unter sich oder auf ein Hochgeschwindigkeits-Kommunikations- und Schaltnetzwerk arbeiten, dadurch gekennzeichnet, daß es besteht aus einem zentralen Steuerkreis (1), der einem primären Mikroprozessor zugeordnet ist, sowie sekundären Steuerkreisen (3.1—3.1), von denen jeder einem Terminal oder einer Gruppe von Terminals zugeordnet ist, die über eine Leitung (2) angeschlossen sind, welche ein Zeitmultiplex von $n$ Kanälen oder Zeitintervallen (iT0-iT(n—1)) überträgt, die in Mehrfachfeldern von $m$ Feldern (0-(m—1)), gruppiert sind, wobei der iTx des Feldes 0 das Multifeld-Abgleichsignal enthält und der iTx der Felder 1 bis $p$ einem Service-Informationsaustausch zugewiesen sind, während die anderen iT's, die einem Informationsaustausch zuweisbar sind, in jedem sekundären Steuerkreis (3.1-3.1) mit einem IT Zähler (16) und einem Feldzähler (17) ausgerüstet sind, deren Ausgänge entsprechend an iT und Feld-Zahl-Decoder (18, 19) gelegt sind, deren Ausgänge an ein UND-Tor 21 gelegt sind, dessen Ausgang an den Ansteuerungseingang eines ersten Reihen-Parallel-Wandlers (26) geschaltet ist, dessen Reiheneingang

9

das Zeitmultiplex empfängt und dessen paralleler Ausgang an einen Eingang eines sekundären Mikroprozessors (28) gelegt ist, von welchem ein Ausgang an den parallelen Eingang eines Parallel/Reihen-Wandlers (27) gelegt ist, dessen Ansteuerungseingang mit dem Ausgang eines zweiten Drei-Eingangs-UND-Tores (23) verbunden ist, dessen beide ersten Eingänge entsprechend mit den Ausgängen des iT-Zahl-Decoders (18) und des Feld-Zahl-Decoders (19) verbunden sind, und dessen dritter Eingang mit dem Ausgang eines ersten Flip-Flops (29) verbunden ist, daß ferner der Ausgang des zweiten Drei-Eingangs-UND-Tores (23) an den Zeitmultiplexkreis geschaltet ist, und daß die Ausgänge des iT-Zahl-Decoders (18) und des Feld-Zahl-Decoders (19) für die iTx der Felder 1 bis $p$ aktiviert werden.

2. Konzentrator nach Anspruch 1, dadurch gekennzeichnet, daß jeder sekundäre Mikroprozessor (28) einen Ausgang an eine Sammelleitung (30) geschaltet hat, die ihn mit einem Empfangskanalregister (33), einem Empfangsfeldregister (34), einem Sendekanalregister (31) und einem Sendefeldregister (32) verbindet, daß diese vier Register (31—34) entsprechend an die ersten Eingänge von vier Komparatoren (35, 36, 37, 38) gelegt sind, daß der Ausgang des Kanalzählers (16) ebenfalls entsprechend an den zweiten Eingang des ersten (36) und des dritten (35) Komparators gelegt ist und daß der Ausgang des Feldzählers (17) ebenfalls entsprechend anden zweiten Eingang des zweiten (38) und des vierten (37) Komparators geschaltet ist, und daß die Ausgänge des ersten und des zweiten Komparators (36, 38) an die beiden Eingänge eines dritten Drei-Eingangs-UND-Tores (46) gelegt sind, dessen dritter Eingang mit einem Steuerausgang des sekundären Mikroprozessors (28) verbunden ist und dessen Ausgang an den Ansteuerungseingang eines dritten Reihen/Parallel-Wandlers (48) gelegt ist, dessen Eingang das Zeitmultiplex empfängt und dessen Ausgang an ein Terminal geschaltet ist, das dem zweiten Steuerkreis zugeordnet ist, daß die Ausgänge des dritten und vierten Komparators (35, 37) an die beiden Eingänge eines vierten Drei-Eingangs-UND-Tores (39) gelegt sind, dessen dritter Eingang mit dem Steuerausgang des sekundären Mikroprozessors (28) verbunden ist und dessen Ausgang an den Ansteuerungseingang eines vierten Parallel/Reihen-Wandlers (41) geschaltet ist, dessen Ausgang an den Zeitmultiplexkreis geschaltet ist.

3. Konzentrator nach Anspruch 2, dadurch gekennzeichnet, daß jeder sekundäre Steuerkreis besteht aus mehreren Gruppen von vier Registern, wobei jede Gruppe ein Empfangskanalregister, ein Empfangsfeldregister, ein Sendekanalregister und ein Sendefeldregister umfaßt, sowie Gruppen von Komparatoren, wobei jede Gruppe einen ersten, einen zweiten, einen dritten und einen vierten Komparator umfaßt, sowie diesen zugeordnet Terminals.

4. Konzentrator nach Anspruch 2 oder 3, dadurch gekennzeichnet, daß wenn ein bestimmtes Terminal, das dem sekundären Steuerkreis zugeordnet ist, ein Telefon ist, die Feldregister der Gruppe aus dieser herausgenommen werden, ebenso wie der zweite und der vierte Komparator.

**Claims**

1. A communication system concentrator for connecting a number of asynchronous data processing terminals operating at various speeds, either among themselves, or to a high speed communication and switching network, characterized in that it is comprised of a central control circuit (1) associated to a primary microprocessor, and secondary control circuits (3.1-3.l), each being associated with a terminal or a group of terminals, which are connected by a line (2) which transmits a time division multiplex of $n$ channels or time slots (iTO-iT(n—1)) grouped into multiframes of $m$ frames (0-(m—1)), the iTx of frame 0 containing the multiframe alignment signal and the iTx of frame 1 to $p$ being assigned to service information exchanges, the other iT's being assignable to information exchanges, in each secondary control circuit (3.1-3.l) being provided with an iT counter (16) and a frame counter (17) outputs of which are respectively connected to iT and frame number decoders (18, 19) whose outputs are connected to an AND gate (21) whose output is connected to the enable input of a first serial-to-parallel converter (26) whose serial input receives the time division multiplex and whose parallel output is connected to one input of a secondary microprocessor (28) having one output connected to the parallel input of a parallel-to-serial converter (27) whose enable input is connected from the output of a second three-input AND gate (23) having its first two inputs respectively connected from the outputs of the iT number decoder (18) and frame number decoder (19) and its third input connected from the output of a first flip-flop (29), the output of the second three-input AND gate (23) being connected to the time division multiplex, the outputs of the iT number decoder (18) and frame number decoder (19) being activated for the iTx of frames 1 to $p$.

2. A concentrator in accordance with claim 1, characterized in that each secondary microprocessor (28) has one output connected to a bus (30) linking it to a reception channel register (33), a reception frame register (34), a transmission channel register (31) and a transmission frame register (32), these four registers (31—34) being respectively connected to the first inputs of four comparators (35, 36, 37, 38), the output of the channel counter (16) also being respectively connected to the second input of the first (36) and third (35) comparators and the output of the frame counter (17) being also respectively connected to the second input of the second (38) and fourth (37) comparators, the outputs of the first and second comparators (36, 38) being connected to two inputs of a third three input AND gate (46) whose third input is connected from a control output of the secondary microprocessor (28) and whose output is connected to the enable input of a third serial-to-parallel converter (48) whose input receives the time division multiplex and whose output is connected to a terminal associated with the secondary control circuit, the outputs of the third and fourth comparators (35, 37) being connected to two inputs of a fourth three input AND gate (39) whose third input is connected from the control output of the secondary microprocessor (28) and whose output is connected to the enable input of a fourth parallel-to-serial converter (41) whose output is connected to the time division multiplex.

3. A concentrator in accordance with claim 2, characterized in that each secondary control circuit is comprised of as many groups of four registers, each group being comprised of a reception channel register, a reception frame register, a transmission channel register and a transmission frame register, and groups of comparators, each group being comprised of a first, a second, a third and a fourth comparator, as terminals which are associated with it.

4. A concentrator in accordance with claim 2 or 3, characterized in that, when the considered terminal associated with the secondary control circuit is a telephone, the frame registers of the group are removed therefrom as well as the second and the fourth comparators.

# FIG.1

# FIG.2

$T_1$  $T_{21}$  $T_{41}$  $T_{61}$  $T_{81}$

1 trame

2,4 kb

1 iT

1 trame = 125 μs = 32 iT

$w_1$  $w_2$  $w_3$  $w_4$  $w_5$  $w_6$  $w_7$  $w_8$

1 = 3,906 μs

FIG.3

FIG.4

30 (fig. 3 et 5)

55    54    53    52    51    50    49

58    57    56

63    62    61

59

60    66    65

64

vers 39 ou 46 (fig. 3 et 5)

17 (fig. 3 et 5)

0 036 808

FIG.5

0 036 808